# EUROPEAN PATENT SPECIFICATION

(11) **EP 0 745 412 B1**
(45) Date of publication and mention of the grant of the patent: **15.03.2000**
(21) Application number: 96303867.4
(22) Date of filing: 30.05.1996
(51) Int. Cl.: A63F 13/12

(54) **Apparatus and method for playing a game or game event**
Vorrichtung und Verfahren zum Spielen eines Spieles oder Spielereignisses
Dispositif et procédé pour jouer à un jeu ou à un événement ludique

(30) Priority: 30.05.1995 US 453403
(43) Date of publication of application: 04.12.1996
(73) Proprietor: Two Way TV Limited, Avonmore Road, London W14 8TS (GB)
(72) Inventor: Berner, Mark K., Santa Clara, CA 95050 (US); Lockton, David B, Atherton, CA 94027 (US); Weston, David Robert, Chinner, Oxfordshire OX9 4BY (GB)
(74) Representative: Skone James, Robert Edmund

(56) References cited:
- WO-A-89/06405
- WO-A-94/03247
- GB-A- 2 161 629
- US-A- 4 592 546
- US-A- 4 877 408

## Description

The present invention relates to a method and associated apparatus for playing a common game or game event.

As described in the Lockton et al US Patent No. 4592546 home television viewers of a football game or television game per se, such as Wipeout, Fifteen to One or Mastermind etc., may play along, for example, with the television game, to predict, for example, the first player to score and/or, in the case of a quiz game, to guess the correct answer along with the actual player in the TV studio. As described by the above patent, the player is scored on his success.

Because competition is a very strong motivational factor for all game players, the players will inevitably compare their score to others who are competing at the same time. Since all of the above games, particularly the live TV games such as Wipeout, Fifteen to One, Mastermind, are by definition games of skill, this means that the players will improve over time. Since the more experienced or veteran players will inevitably, because of their experience, make the higher scores, a novice player may be discouraged.

Another apparatus for playing a game is known from GB-A-2.161.629 which stores handicaps for each player and modifies the scores by the handicap values.

In accordance with a first aspect of the present invention there is provided apparatus for playing a common game or game event, the game or game event being played simultaneously by a plurality of participants comprising means for providing the game and/or game event and transmitting the game or game event to each of the participants; control unit means for receiving game play inputs by each participant, producing game scores in response to the game play inputs and transmitting the game scores to a central processor; means for determining one of a plurality of skill levels of each of the participants for a particular game; means for storing the skill level of each participant for each type of game and/or game event; and a central processor for receiving the game scores from the control unit comprising means for grouping participants together having similar skill levels and communicating relative game scores to the participants only for that particular skill level.

The present invention provides a means of allowing participants in a common game to compete only against other players having a similar skill level. This ensures that the motivational factor is maintained.

The participants may all play with a common control unit, but preferably each participant is located remotely from the other participants and each participant or group of participants has a separate respective control unit. In this case, each control unit preferably filters and displays only those results messages which pertain to the skill level of the respective associated participant.

Preferably the apparatus further comprises means for promoting or demoting to a relatively higher or lower skill level the more successful or unsuccessful players of each game. In this case, the system preferably provides a congratulatory message to a participant who is promoted to a higher skill level. This provides an added incentive to the game participants.

Each participant may have a single skill level associated with a plurality of games. However in a preferable embodiment the means for storing the skill level stores a plurality of skill levels for each participant, each skill level being associated with a particular one of a plurality of games or game events.

Preferably the means for providing the game and/or game event broadcasts the game and/or game event to the control unit in the form of a broadcast signal. Typically the control unit comprises a stand alone device complete with a displaying mechanism (for example an LCD). Alternatively the control unit may comprise a set-top box which overlays graphics and text onto a participant's tv screen or monitor on top of the broadcast signal, in which case one or more players can use the unit simultaneously.

According to a second aspect of the present invention there is provided a method of providing a common game or game event, the game or game event being played simultaneously by a plurality of participants, the method comprising generating the game and/or game event; transmitting the game or game event to each of the participants; receiving game play inputs from each participant; producing game scores in response to the game play inputs; transmitting the game scores to a central processor; determining one of a plurality of skill levels of each of the participants for a particular game; storing the skill level of each participant for each type of game and/or game event; receiving the game scores and grouping the participants together having similar skill levels; and communicating relative game scores to the participants only for that particular skill level.

A number of embodiments of the present invention will now be described with reference to the accompanying drawings, in which:-
Figure 1 is a block diagram of a system the present invention;
Figure 2 is a flow chart showing the operation of one portion of Figure 1;
Figure 3 is a chart illustrating possible skill levels or tiers of the present invention (many levels are possible);
Figure 4 is a flow chart illustrating the operation of another portion of Figure 1;
Figures 5 and 6 are an alternative operation of this portion of Figure 1;
Figure 7 is a flow chart illustrating the operation of another portion of Figure 1; and,
Figures 8 and 9 are flow charts illustrating alternative types of operation of a portion of Figure 1.

Note in a system with multiple players a tier level will exist for each player per game.

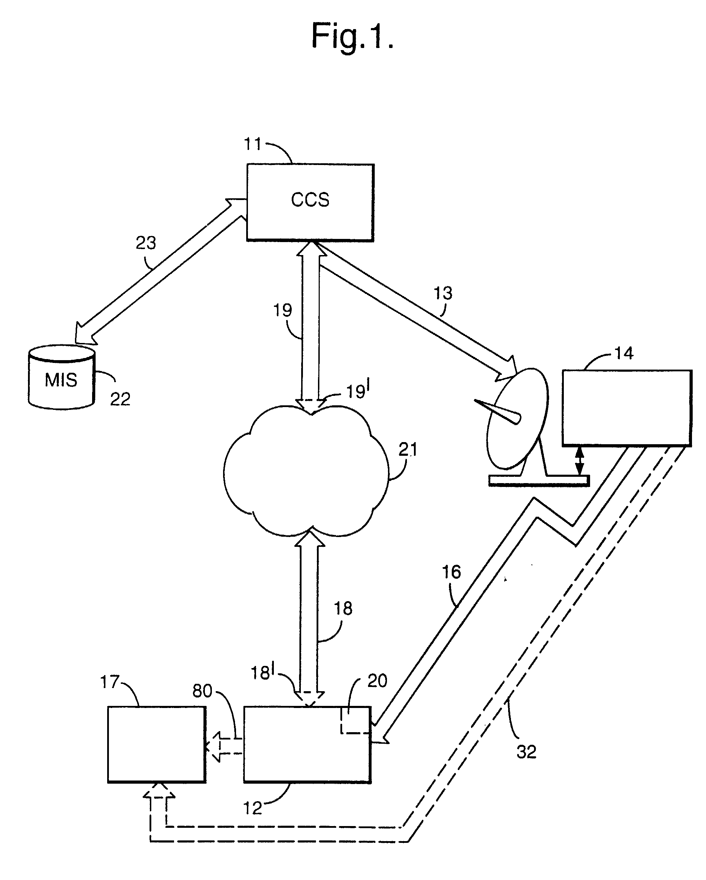

Figure 1 illustrates the overall communication and control network used with the present invention and includes a central computer system (CCS) 11 which regulates or controls the overall system both as to the common game and its events for example, football, Wipeout, Fifteen to One, Horse Racing, or an off-line specialised game specifically directed to the player or customer, CCS 11 also controls things of a supervisory nature such as initialising game parameters and score ranges.

Specifically, and in more detail, central computer system 11 broadcasts game data and results via link 13 by a suitable transmission medium which may conveniently be a TV serial distribution network such as the terrestrial broadcast network or cable system, or other link (such as the Internet or Digital Satellite) which is connected to radio and/or TV stations 14. Of course, the customer or participant-player would also have their television receiver 17 which receives a TV signal via link 32, or from control unit 12 via link 80. Referring to the link 16 (which transmits game data and results), this includes either a vertical blanking interval (VBI) of a TV signal on which perhaps the game itself is being transmitted to the user or on a separate radio FM-SCA channel or other data format such as a cable modem. Game data includes lockout signals involving player predictions as described in the '546 patent. The present invention contemplates a number of broadcasts but in particular both the use of football or horse racing broadcast live by television or TV game shows or a particular common game such as a trivia quiz which is initially generated or broadcast by the central computer system 11. The trivia quiz would be received on the display screen of the control unit 12 (not shown) which also includes game inputs (not shown) where the customer may respond; for example, as briefly discussed above, in a football or horse racing predicting a future event, or in the case of a TV game, giving a proper answer.

Only a single control unit 12 is shown in Figure 1, but in general a plurality of control units 12 will be included in the system. That is, each participant may have a single control unit with a single input device. Alternatively or in addition, one or more control units may have a number of input devices (e.g. four), each input device having an associated participant. That is, a control unit may be associated with a group of participants.

Control unit 12 as described in the '546 patent may internally score the player and then at the end of the game, by an internal modem in control unit 12 (not shown but described in the '546 patent), game scores may be uploaded to the central computer system 11, by the links 18 and 19 which extend in the preferred embodiment through the telephone network 21 (or other data transmission network such as the Internet or Digital Satellite). As shown by the line 19, at the same time a telephone transaction or connection is made with the central computer system 11, other information such as skill level (that is tier advancement) may be downloaded to the control unit 12 and stored there in memory 20. This information may be downloaded via lines 18,19 (indicated by the dotted arrow heads 18',19') or via the alternative pathway 13,14,16. Thus in the preferred embodiment, control unit 12 will have permanently stored in it the skill level of a particular participant using the control unit; and moreover for that particular type of game.

Alternatively the control unit may effect its skill level automatically according to some predetermined calculations for a game or group of games which in itself may be downloaded either over the phone line or the broadcast transmission path. Other embodiments may trade off the speed and reduced data transmission requirements gained by determining the ranked score internally to the control unit, by eliminating the need to store the skill levels within the control unit and allow the calculation to take place in the CCS 11 and broadcast individually to each control unit.

Optionally to complete the overall system block diagram of the present invention, also in conjunction with central computer system 11 is a management information system (MIS) 22 which through the link 23 to the central computer system provides for overall operational control of the central computer system. This would include, for example, a competition committee setting up advancement criteria to a higher skill level for each intended game; this would be implemented by the central computer system 11/control unit 12 as will be described below.

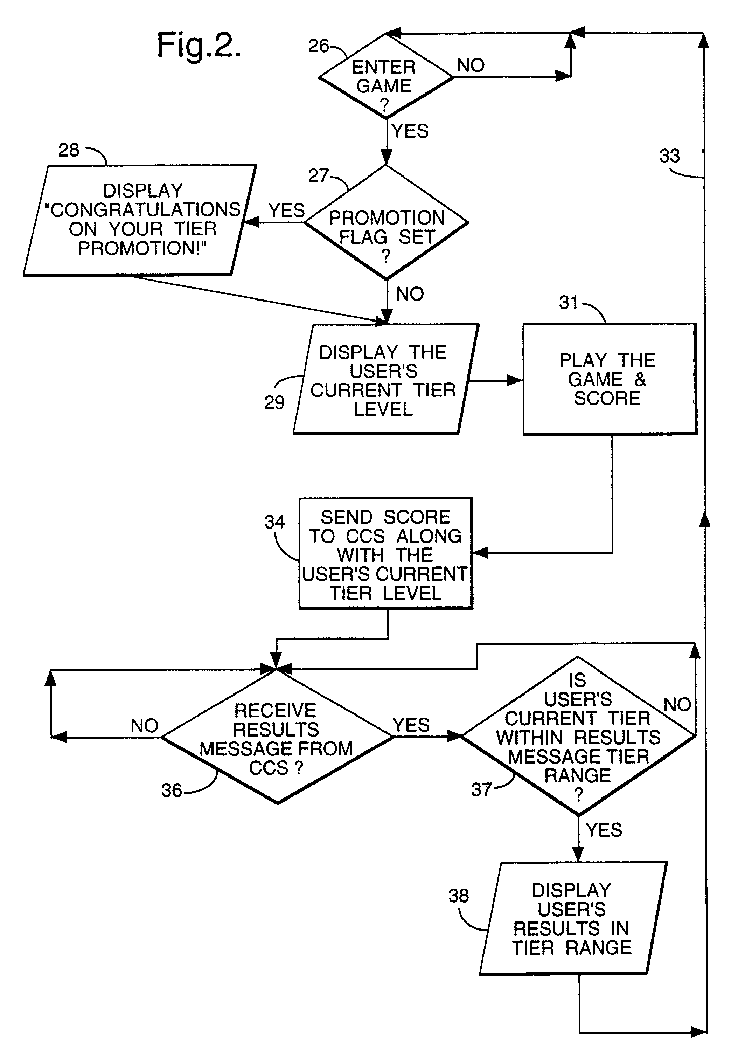

The flow chart of Figure 2 illustrates the operation of the customer control unit 12 which includes processing capabilities such as microprocessor and memory capability (not shown; however, see the '546 patent). In the block 26, the decision is made as whether to enter a game by, for example, selecting the game from the listings menu or in another embodiment energising the control unit and allowing it to automatically receive information from the down link 16 (see Figure 1). Optionally after the game is entered, block 27 asks whether a promotion flag has been set. As will be discussed below, this means a promotion from one skill level or tier to another. After this flag has been set, then on the display screen of the control unit there is displayed as shown in block 28 "Congratulations on your tier promotion". Alternatively the message may be generated either in or after the game play effecting the promotion. Then a path goes to block 29 where the customer's current tier level is displayed. Thus, in the control unit of the customer or player participant, the tier level for a particular game is permanently stored. Of course, the central computer system 11, would also include this information. But the fact that the customer control unit has knowledge of the tier level for each game is an advantage for the following three reasons:
1. the control unit can acknowledge what tier the player is in prior to entering a game; if the tier level was only known at the central station or facility, the customer might not be notified of the promotions in a timely manner;
2. the real time system which computes scores and broadcast results does not have to make "a slow" database query to identify the player's tier and this enables the system to have a much larger scoring capacity;
3. when broadcasting results (as will be discussed below) to the various customers/player participants, results can be simultaneously broadcast for all tiers. Then the specific control unit of the customer, because their particular tier or skill level is stored there, can filter or exclude all messages except those scores that relate to the particular tier. This has the advantage of a much relaxed bandwidth to inform users of their scores. This effectively means that the player is competing only against other players for that particular skill level and the motivational factor is still maintained.

Continuing with the flow chart of Figure 2, the player in block 31 plays the particular game (be it football, horse racing, quiz show etc.) and the control unit as described in the '546 patent will score the player. Depending on the type of game/application and the user's score the telephone uplink Blocks 18,19,21 may send score tier information to the CCS Block 11.

As will be discussed below, when the central computer system 11 receives sufficient score information, it will determine the final results and transmit them to the control units 12. The preferred embodiment being the transmission of a histogram of percentile ranking, although other data formats could be used. As shown in block 37, the user's control unit 12 will filter only those results messages which pertain to that particular skill level of tier. Thus as shown in block 38, only these results are displayed. Thus, the relative game scores are effectively communicated by way of display, that is, only for that particular skill level.

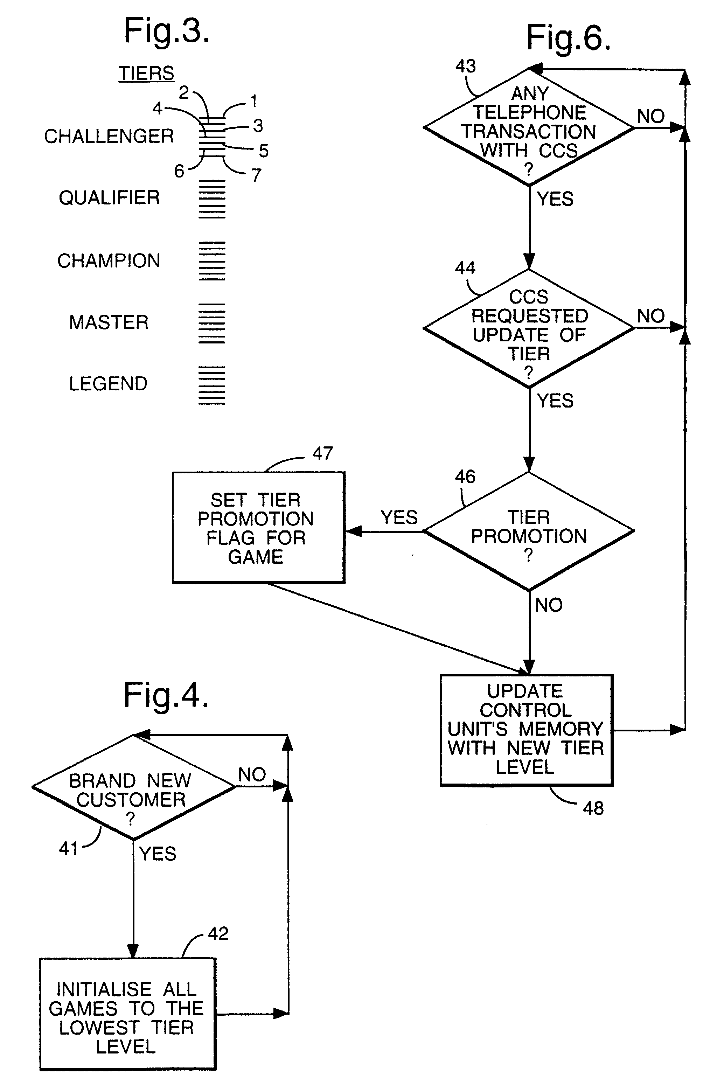

Many possible skill levels can exist: the following is one example. Referring briefly to such skill levels, Figure 3 shows a table of various skill levels or tiers where all members or players start off at the challenger level, then advance to qualifier; champion; master and legend. As indicated, in conjunction with first challenger level, there may also be a number of sub-levels (for instance seven levels indicated at 1-7) for each major level. As shown in Figure 4, in block 41 when there is a brand new customer (that is, a player has entered the game for the first time) that game, and for that matter all the other games, are initialised at the lowest tier level 1. This may also happen if a control unit is changed. This decision would be made at the central computer system 11 in conjunction with the management information system 22 or by the control unit itself.

A number of alternative tier environments are available. At the lowest level, each control unit may have a single tier level, applicable for all games. Alternatively, the tier level associated with the control unit may vary in accordance with the game or generic game type being played. In addition, where the control unit has a plurality of input devices, each input device may have an associated tier level.

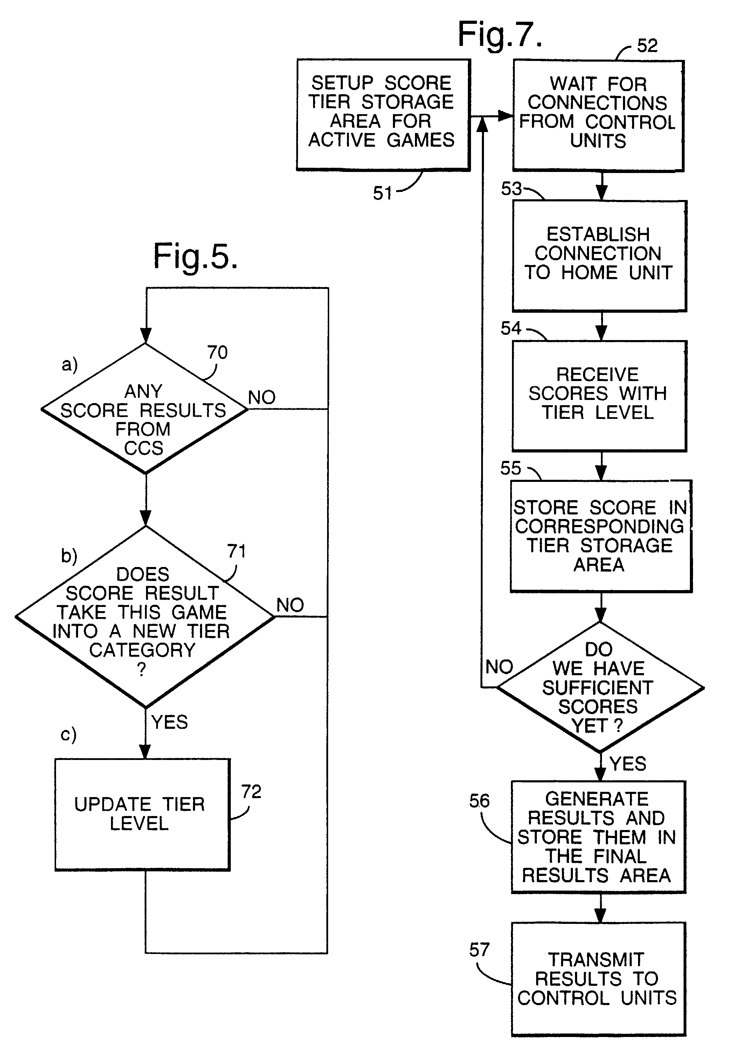

The preferred method of tier change is shown in Figure 5. The transmissions broadcast by the CCS 11 are received by the control unit 12. If the message is a score result 70 then the control unit decides at 71 if the score for that unit when compared with the values for tier updating for that particular game and the past performance of the user for that game affect the tier level. If so the tier level is updated at 72. This embodiment allows the tier level to be affected without the need for telephone calls to take place. The process is transparent to the user and occurs when any game is played.

An alternative method of tier information change is shown in the flow chart of Figure 6 where either any telephone transaction, as shown in block 43, is made by a control unit with the central station, or individual messages are broadcast to each home unit, then in block 44 the question is asked whether a tier update or promotion has been requested by the CCS. Details of this are shown in Figure 6. But in general a tier adjustment occurs if the customer or player participant in a previous game has performed above a certain level. Next, if a tier adjustment occurs as sensed in block 46, then a flag is set at 47 (see step 27 in Figure 2). Finally, in block 48, the user's control unit 20 will be upgraded with the new tier level.

All of the foregoing is transparent to the user and occurs every time a telephone transaction is made with the central computer system. And this would occur when the player customer is uploading their score or for any other telephone transaction such as if the system is being used for a survey where the customer gives their opinion or perhaps if the system is being used to make purchase of some item.

Figure 7 illustrates the CCS functionally with regards to scoring. Once games become active a storage area is set aside at 51 for each different tier level. The scoring routine then waits for connections from control units 52. Once a control unit connects to the CCS 53 the scores are received from the control unit along with the corresponding tier level for the players using the unit 54. Once the scores for the home unit have been received they are stored in the corresponding tier storage area 55. When sufficient scores have been received by the CCS to satisfy the scoring criteria for the game and/or game event the CCS generates the results and these are stored in 56. They are then transmitted to the control units using the transmission path.

With respect to the scoring and determining the winning score, etc., it is not necessary that scoring calls are received from all players. In other words, by statistical techniques the winner of the game may be forecast. This is all shown in either of the patents 5130138 and 5120076.

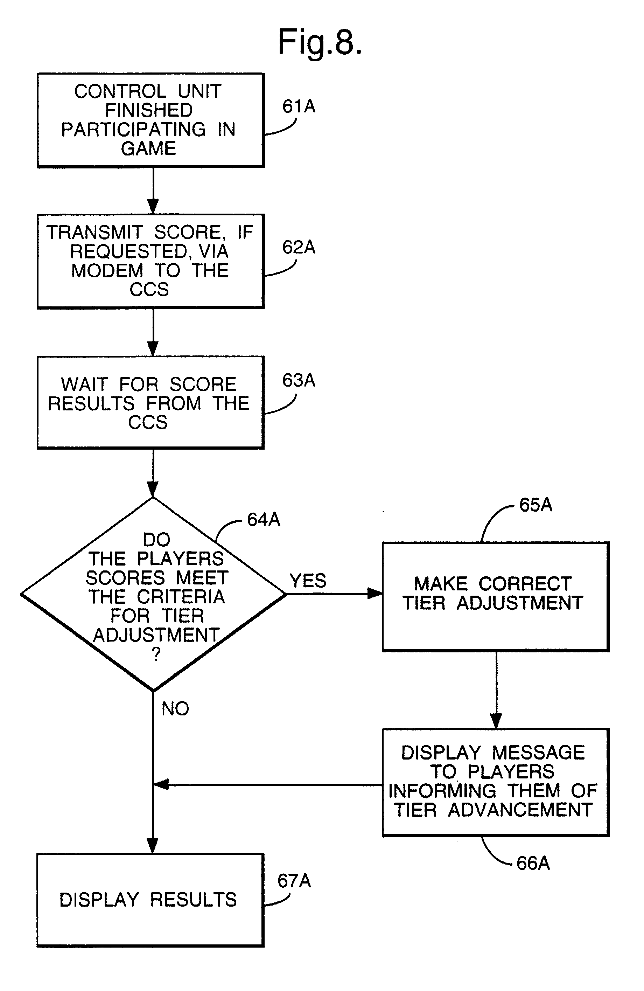

Figure 8 illustrates the procedure for Tier Adjustment. A set of criteria for each game would be established to control the adjustment of tier levels for any players for any games. An example of criteria for tier adjustment might be that if the player achieved a score within the top five percent within a given tier, then they might be advanced to the next tier. Conversely a player score within the lowest five percent of a tier may result in a tier demotion. Consistency of scoring over a number of games may also be taken into account.

In the preferred embodiment, Figure 8, the control unit will decide itself if and when tier adjustment should occur. Following the participation in a game 61A, and the transmission of the control unit's scores to the CCS 62A, once this has been done the Control Unit waits for the results broadcast from the CCS 63A. Once this has been received the Control Unit can then decide whether or not the current Player's scores make them eligible for a tier adjustment 64A. If this is the case then the tier adjustment is made and stored in the Control Unit's permanent memory storage at 65A and the results of the adjustment are displayed to the user. Following this step the overall results for the game are displayed to put the Control Units standing into context at 67A.

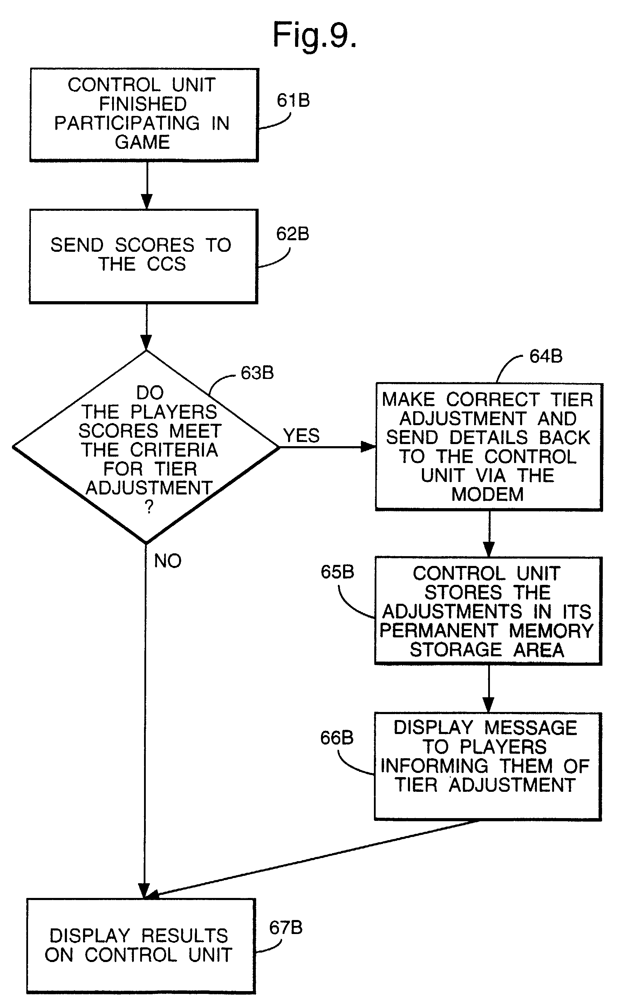

An alternative implementation could place the onus of tier adjustment on the CCS. This is illustrated in Figure 9. Following the participation in a game, 61B the Control Unit sends its scores to the CCS and then the MIS 22 will decide if a tier adjustment is required according to the criteria established for the particular game 63B. If a tier adjustment is necessary then the adjustment information will be sent back to the control unit 64B and the control unit will update its tier level for that game and optionally store the adjustments in its permanent memory storage area 65B and a message will be displayed to the players 66B. Following this the results for the game will be displayed on the Control Unit informing the players of their standing 67B. The key difference between the two methods is the trade off between the number of messages sent between the control unit and the CCS versus the permanent/continuously powered memory storage requirement in the Control Unit.

With the use of management information system 22, typically in most cases, customers or players compete only against other customers in that tier. However, there is the capability to allow competition between players in any range of tiers. Thus with this flexibility, there may be occasional "open" tournaments as well as stratified tournaments. In addition, the MIS can handle a multitude of different situations for any given game at any given time. There are many different ways in which the event might be tiered. For example, when the game is off-line (that is, not being broadcast on a live television station) and is being offered throughout the day, at 7.00am in the morning, when there is a relatively small audience, the early game can be an open game where all tiers are lumped together; in contrast, at 8:00pm when there are likely to be many players in stiff competition, then the event could be scheduled for all the available skill levels or tiers. When the event is scheduled the CCS is notified of the tiering scheme as well as the management information system so they can both perform their tasks accordingly. Moreover, the MIS has been designed to facilitate the effort in determining individual advancements. They system also easily allows for modifications by the competition committee. For example, if a limitation on the number of players to advance is desired, or a special exception should be made, there is this capability.

In summary the present invention provides that the customer/players play games or compete against other members of similar skill level. They are challenged by their level of competition and moreover they are rewarded as they move up the tier ladder. Furthermore, they are not frustrated by comparing their scores to that of top tier level or legend players. They are encouraged by seeing their scores improve against players who are of similar experience and skill.

## Claims

1. Apparatus for playing a common game or game event, the game or game event being played simultaneously by a plurality of participants comprising means (11,13,14,16) for providing the game and/or game event and transmitting the game or game event to each of the participants; control unit means (12) for receiving game play inputs by each participant, producing game scores in response to the game play inputs and transmitting the game scores to a central processor (11); means for determining one of a plurality of skill levels (1-7) of each of the participants for a particular game; means (20) for storing the skill level of each participant for each type of game and/or game event; and a central processor (11) for receiving the game scores from the control unit comprising means for grouping participants together having similar skill levels and communicating relative game scores to the participants only for that particular skill level.

2. Apparatus according to claim 1 wherein each participant is located remotely from the other participants, and wherein the control unit (12) means comprises a respective control unit associated with each participant.

3. Apparatus according to claim 2 wherein each control unit (12) filters only those results messages which pertain to the skill level of the respective associated participant.

4. Apparatus according to any of the preceding claims further comprising means for promoting/demoting to a relatively higher/lower skill level more successful/unsuccessful participants in the game or game event.

5. Apparatus according to claim 4 further comprising means for providing a congratulatory message to a participant for being promoted to a higher skill level.

6. Apparatus according to any of the preceding claims further comprising means responsive to a participant forming a dedicated telephone line link (19) or other data path such as a cable modem with the central processor for updating the skill level of the participants for a particular game.

7. Apparatus according to claim 5 and 6 wherein during the updating the control unit (12) includes means for receiving a flag set to provide the congratulatory message to the participant for being promoted to a higher skill level.

8. Apparatus according to any of the preceding claims wherein the means (20) for storing the skill level stores a plurality of skill levels for each participant, each skill level being associated with a particular one of a plurality of games or game events.

9. Apparatus according to any of the preceding claims wherein the control unit means (12) includes the means for storing the skill level of each participant.

10. Apparatus according to any of the preceding claims wherein the common game and/or game event is broadcast by a television station and associated game data including a lockout signal to prevent improper game inputs by the participant are transmitted by another mass communication means including one of the following: subcarrier authorisation channel of a FM Standard broadcast channel, the vertical blanking interval (VBI) of the same TV signal transmitting the game and/or game event itself, or another broadcast television signal or other type of data network such as cable modem etc.

11. Apparatus according to any of the preceding claims wherein the common game and/or game event is a live television broadcast of a live game including, but not limited to, one of the following types: football, horse racing.

12. Apparatus according to any of the preceding claims wherein the central processor broadcasts a lockout signal to prevent improper game inputs by the participants.

13. A method of providing a common game or game event, the game or game event being played simultaneously by a plurality of participants, the method comprising generating the game and/or game event; transmitting the game or game event to each of the participants; receiving game play inputs from each participant; producing game scores in response to the game play inputs; transmitting the game scores to a central processor; determining one of a plurality of skill levels of each of the participants for a particular game; storing the skill level of each participant for each type of game and/or game event; receiving the game scores and grouping the participants together having similar skill levels; and communicating relative game scores to the participants only for that particular skill level.

## Patentansprüche

1. Vorrichtung zum Spielen eines gemeinsamen Spieles oder Spielereignisses, wobei das Spiel oder das Spielereignis gleichzeitig von einer Mehrzahl von Teilnehmern gespielt wird, mit Mitteln (11, 13, 14, 16) zum Bereitstellen des Spieles und/oder des Spielereignisses und zum Übertragen des Spieles oder des Spielereignisses zu jedem der Teilnehmer; mit Steuereinheitsmitteln (12) zum Empfangen von Spiel-Spieleingaben von jedem Teilnehmer, zum Erzeugen von Spielpunkten in Reaktion auf die Spiel-Spieleingaben und zum Übertragen der Spielpunkte an eine zentrale Verarbeitungseinrichtung (11); mit Mitteln zum Bestimmen eines einer Mehrzahl von Wissensniveaus (1-7) eines jeden der Teilnehmer für ein bestimmtes Spiel; mit Mitteln (20) zum Speichern des Wissensniveaus jedes Teilnehmers für jeden Typ von Spiel und/oder Spielereignis; und mit einer zentralen Verarbeitungseinrichtung (11) zum Empfangen der Spielpunkte von der Steuereinheit, die Mittel zum Zusammengruppieren von Teilnehmern mit ähnlichen Wissensniveaus und zum Austauschen relativer Spielpunkte mit den Teilnehmern nur für das bestimmte Wissensniveau aufweist.

2. Vorrichtung nach Anspruch 1, bei der jeder Teilnehmer sich von den anderen Teilnehmern entfernt befindet und bei der die Steuereinheitsmittel (12) eine jeweilige Steuereinheit aufweisen, die jedem Teilnehmer zugeordnet ist.

3. Vorrichtung nach Anspruch 2, bei der jede Steuereinheit (12) nur diejenigen Ergebnismitteilungen filtert, die sich auf das Wissensniveau des jeweiligen zugeordneten Teilnehmers beziehen.

4. Vorrichtung nach irgendeinem der vorhergehenden Ansprüche, außerdem Mittel aufweisend zum Heraufstufen/Herabstufen auf eine relativ höheres/niedrigeres Wissensniveau von eher erfolgreichen/nicht erfolgreichen Teilnehmern in dem Spiel oder dem Spielereignis.

5. Vorrichtung nach Anspruch 4, außerdem Mittel aufweisend zum Übermitteln einer Gratulations-Mitteilung an einen Teilnehmer dafür, daß er auf ein höheres Wissensniveau heraufgestuft worden ist.

6. Vorrichtung nach irgendeinem der vorhergehenden Ansprüche, außerdem Mittel aufweisend, die auf einen Teilnehmer reagieren und eine eigene Telefonleitungsverknüpfung (19) oder einen anderen Datenweg, wie ein Kabel-Modem, mit der zentralen Verarbeitungseinrichtung bilden, um das Wissensniveau der Teilnehmer für ein bestimmtes Spiel zu aktualisieren.

7. Vorrichtung nach Anspruch 5 und 6, bei der während des Aktualisierens die Steuereinheit (12) Mittel zum Empfangen eines Hinweises aufweist, der gesetzt wird, um die Gratulations-Mitteilung für eine Heraufstufung auf ein höheres Wissensniveau an den Teilnehmer zu übermitteln.

8. Vorrichtung nach irgendeinem der vorhergehenden Ansprüche, bei der die Mittel (20) zum Speichern des Wissensniveaus eine Mehrzahl Wissensniveaus für jeden Teilnehmer speichern, wobei jedes Wissensniveau einem besonderen einer Mehrzahl von Spielen oder Spielereignissen zugeordnet ist.

9. Vorrichtung nach irgendeinem der vorhergehenden Ansprüche, bei der die Steuereinheitsmittel (12) die Mittel zum Speichern des Wissensniveaus jedes Teilnehmers enthalten.

10. Vorrichtung nach irgendeinem der vorhergehenden Ansprüche, bei der das gemeinsame Spiel und/oder Spielereignis von einer Fernsehstation gesendet und zugeordnete Spieldaten, einschließlich eines Ausschlußsignals, um ungeeignete Spieleingaben durch den Teilnehmer zu vermeiden, durch ein anderes Massenkommunikationsmittel übertragen werden, einschließlich einem der folgenden: Nebenträger-Berechtigungskanal eines Standard-FM-Rundfunkkanals, die vertikale Austastlücke (VBI) desselben TV-Signals, das das Spiel und/oder das Spielereignis selbst sendet, oder ein anderes Rundfunk/Fernsehsignal oder ein anderer Typ von Datennetzwerk, wie ein Kabel-Modem, usw.

11. Vorrichtung nach irgendeinem der vorhergehenden Ansprüche, bei der das gemeinsame Spiel und/oder Spielereignis eine Live-Fernsehsendung eines Live-Spiels ist, einschließlich, aber nicht begrenzt auf einen der folgenden Typen: Fußball, Pferderennen.

12. Vorrichtung nach irgendeinem der vorhergehenden Ansprüche, bei der die zentrale Verarbeitungseinrichtung ein Ausschlußsignal sendet, um ungeeignete Spieleingaben durch die Teilnehmer zu vermeiden.

13. Verfahren zum Bereitstellen eines gemeinsamen Spieles oder Spielereignisses, wobei das Spiel oder das Spielereignis gleichzeitig von einer Mehrzahl von Teilnehmern gespielt wird, welches Verfahren umfasst: Erzeugen des Spiels und/oder des Spielereignisses; Übertragen des Spiels oder Spielereignisses zu jedem der Teilnehmer; Empfangen von Spiel-Spieleingaben von jedem Teilnehmer, Erzeugen von Spielpunkten in Reaktion auf die Spiel-Spieleingaben; Übertragen der Spielpunkte an eine zentrale Verarbeitungseinrichtung; Bestimmen eines einer Mehrzahl von Wissensniveaus eines jeden der Teilnehmer für ein bestimmtes Spiel; Speichern des Wissensniveaus jedes Teilnehmers für jeden Typ von Spiel und/oder Spielereignis; Empfangen der Spielpunkte und Zusammengruppieren der Teilnehmer mit ähnlichen Wissensniveaus; und Übermitteln relativer Spielpunkte an die Teilnehmer nur für das bestimmte Wissensniveau.

## Revendications

1. Dispositif pour jouer à un jeu courant ou à un événement ludique, le jeu ou événement ludique étant joué simultanément par une pluralité de participants comprenant des moyens (11, 13, 14, 16) pour fournir le jeu et/ou l'événement ludique et transmettre le jeu ou l'événement ludique à chacun des participants ; des moyens d'unité de commande (12) pour recevoir des entrées de jeu de chaque participant, produire des scores de jeu en réponse aux entrées de jeu et transmettre les scores de jeu à un processeur central (11) ; des moyens pour déterminer un niveau parmi une pluralité de niveaux d'adresse (1 à 7) de chacun des participants pour un jeu particulier ; des moyens (20) pour stocker le niveau d'adresse de chaque participant pour chaque type de jeu et/ou événement ludique ; et un processeur central (11) pour recevoir les scores de jeu depuis l'unité de commande, comprenant des moyens pour regrouper ensemble des participants ayant des niveaux d'adresse similaires et communiquer les scores de jeu relatifs aux seuls participants de ce niveau d'adresse particulier.

2. Dispositif selon la revendication 1, dans lequel chaque participant est situé à une certaine distance des autres participants et dans lequel les moyens d'unité de commande (12) comprennent une unité de commande respective associée à chaque participant.

3. Dispositif selon la revendication 2, dans lequel chaque unité de commande (12) filtre et affiche les seuls messages des résultats correspondant au niveau d'adresse du participant associé respectif.

4. Dispositif selon l'une des revendications précédentes, comprenant en outre des moyens pour favoriser/rétrograder à un niveau d'adresse relativement supérieur/inférieur les meilleurs/les moins bons joueurs de chaque jeu ou événement ludique.

5. Dispositif selon la revendication 4, comprenant en outre des moyens pour délivrer un message de félicitations à un participant qui est promu à un niveau d'adresse supérieur.

6. Dispositif selon l'une des revendications précédentes, comprenant en outre des moyens répondant à l'établissement par un participant d'une liaison téléphonique dédiée (19) ou d'un autre chemin de données tel qu'un modem à câble pour mettre à jour le niveau d'adresse des participants pour un jeu particulier.

7. Dispositif selon l'une des revendications 5 et 6, dans lequel, pendant la mise à jour, l'unité de commande (12) comporte des moyens pour recevoir un indicateur positionné pour délivrer le message de félicitations au participant pour avoir été promu à un niveau d'adresse supérieur.

8. Dispositif selon l'une des revendications précédentes, dans lequel les moyens (20) de stockage du niveau d'adresse contiennent une pluralité de niveaux d'adresse pour chaque participant, chaque niveau d'adresse étant associé à un jeu particulier d'une pluralité de jeux ou d'événements ludiques.

9. Dispositif selon l'une des revendications précédentes, dans lequel les moyens d'unité de commande (12) comportent les moyens pour stocker le niveau d'adresse de chaque participant.

10. Dispositif selon l'une des revendications précédentes, dans lequel le jeu courant et/ou l'événement ludique est diffusé par une station de télévision et des données de jeu associées comportant un signal de blocage pour éviter que des entrées de jeu incorrectes par le participant soient transmises par d'autres moyens de communication de masse comportant un moyen parmi les suivants : canal d'autorisation de sous-porteuse sur un canal standard de diffusion FM, l'intervalle de suppression verticale (VBI) du même signal de télévision que celui qui transmet le jeu et/ou l'événement ludique lui-même ou un autre signal de télévision de diffusion ou un autre type de réseau de données tel qu'un modem pour câble, etc.

11. Dispositif selon l'une des revendications précédentes, dans lequel le jeu courant et/ou l'événement ludique est une diffusion de télévision en direct d'un jeu en direct comportant, sans y être limité, l'un des types suivants : football, course de chevaux.

12. Dispositif selon l'une des revendications précédentes, dans lequel le processeur central diffuse un signal de blocage pour éviter des entrées de jeu incorrectes par les participants.

13. Procédé pour fournir un jeu courant ou un événement ludique, le jeu ou événement ludique étant joué en même temps par une pluralité de participants, le procédé comprenant la génération du jeu et/ou de l'événement ludique ; la transmission du jeu ou de l'événement ludique à chacun des participants ; la réception des entrées de jeu de chaque participant ; la production des scores de jeu en réponse aux entrées de jeu ; la transmission des scores de jeu à un processeur central ; la détermination d'un parmi une pluralité de niveaux d'adresse de chacun des participants pour un jeu particulier ; le stockage du niveau d'adresse de chaque participant pour chaque type de jeu et/ou événement ludique ; la réception des scores de jeu et le regroupement ensemble des participants ayant des niveaux d'adresse similaires ; et la communication des scores de jeu relatifs aux seuls participants de ce niveau d'adresse particulier.
